# EUROPEAN PATENT APPLICATION

(11) **EP 2 955 098 A1**
(43) Date of publication of application: **16.12.2015**
(21) Application number: 14171668.8
(22) Date of filing: 09.06.2014
(51) Int. Cl.: B63B 43/18, G01C 21/20, G05D 1/02, B63H 25/00, B63H 25/02, B63B 49/00, B63J 99/00

(54) **Vessel maneuverability signalling**

(71) Applicant: ABB Technology Ltd, 8050 Zürich (CH)
(72) Inventor: Molander, Mats, 722 10 Västerås (SE); Sjöberg, Johan, 722 18 Västerås (SE); Lindkvist, Rickard, 725 91 Västerås (SE); Widlund, Ola, 129 39 Hägersten (SE)
(74) Representative: Savela, Reino Aleksi

(57) **Abstract**

The invention relates to a method, manoeuvrability signalling arrangement (20) and computer program product for visually signalling the manoeuvrability of a vessel (10) to a vessel operator. The manoeuvrability signalling arrangement obtains current speed data and current trim data, determines an current turning radius (R_{A}) of the vessel (V) based on the current speed data and current trim data, receives a user input regarding vessel operations changes via an operator user interface (22), obtains an investigational trim based on the received user input, determines a predicted turning radius (R_{P}) of the vessel (V) based on the investigational trim, and visually signals manoeuvrability data at least comprising the difference between the current turning radius and the predicted turning radius to the vessel operator via the operator user -interface (20).

## Description

### FIELD OF THE INVENTION

The present invention relates to vessels. More particularly, the invention relates to a method, manoeuvrability signalling arrangement and computer program product for visually signalling the manoeuvrability of a vessel to a vessel operator.

### BACKGROUND

Vessels such as airplanes and ships have become more and more sophisticated with a lot of different computer systems for handling various functions. There may for instance be one computer that handles the control of the manoeuvring and another that handles sensors.

Large vessels crossing the oceans consume a lot of fuel. This fact has triggered the search of ways to reduce the fuel consumption. One such method is optimization of the so called trim, which is a measure of the distribution of the ballast in the vessel. The trim may be represented by the horizontal angle of the vessel in the sea. Trim optimization is now a quite established functionality.

These systems are efficient in optimizing the performance but one potential problem is reduced manoeuvrability of the vessel. Out on the ocean with no obstacles in sight, this is typically not a problem, but when the vessel approaches islands or shallow waters, it could be.

A vessel operator may for this and other reasons want to try out various operations changes such as different trims, for instance linked to fuel consumption. However, it may in this case be of interest to see the effect of such an investigational trim before it is taken into operation, especially with regard to manoeuvrability. This should furthermore be done in a fast an intuitive way without the operator having to divert his or her attention too much from the main object, which is the operation of the vessel.

There is therefore a need for improvement on this situation.

### SUMMARY OF THE INVENTION

The present invention addresses this situation. The invention is therefore directed towards solving the problem of providing an improvement in relation to helping vessel operators to understand consequences to the manoeuvrability for different operations changes.

This object is according to a first aspect of the invention solved through a method of visually signalling the manoeuvrability of a vessel to a vessel operator, the method being performed by a manoeuvrability signalling arrangement and comprising the steps of:
- obtaining current speed data,
- obtaining current trim data,
- determining a current turning radius of the vessel based on the current speed data and current trim data,
- receiving user input regarding vessel operations changes from the vessel operator,
- obtaining an investigational trim based on the received user input,
- determining a predicted turning radius of the vessel based on the investigational trim, and
- visually signalling manoeuvrability data to the vessel operator, said manoeuvrability data at least comprising the difference between the current turning radius and the predicted turning radius.

This object is according to a second aspect of the invention solved through an arrangement for visually signalling the manoeuvrability of a vessel to a vessel operator, the arrangement comprising a visual signalling control unit configured to:
- obtain current speed data,
- obtain current trim data,
- determine a current turning radius of the vessel based on the current speed data and current trim data,
- receive a user input regarding vessel operations changes via an operator user interface,
- obtain an investigational trim based on the received user input,
- determine a predicted turning radius of the vessel based on the investigational trim, and
- visually signal manoeuvrability data to the vessel operator via the operator user interface, said manoeuvrability data at least comprising the difference between the current turning radius and the predicted turning radius.

This object is according to a third aspect of the invention achieved through computer program product for computer program product for visually signalling the manoeuvrability of a vessel to a vessel operator, said computer program product being provided on a data carrier comprising computer program code configured to cause a manoeuvrability signalling arrangement to, when said computer program code is loaded into the manoeuvrability signalling arrangement
- obtain current speed data,
- obtain current trim data,
- determine a current turning radius of the vessel based on the current speed data and current trim data,
- receive user input regarding vessel operations changes from the vessel operator,
- obtain an investigational trim based on the received user input,
- determine a predicted turning radius of the vessel based on the investigational trim, and
- visually signal manoeuvrability data to the vessel operator, said manoeuvrability data at least comprising the difference between the current turning radius and the predicted turning radius.

The present invention has a number of advantages. The visual signalling gives the vessel operator a good indication of the calculated, predicted limits of steering and/or braking manoeuvrability in a quick and directly understandable way. He or she may because of this easily obtain ship operations settings that best matches the situation, leading for example to improved fuel consumption, while giving acceptable manoeuvrability in the environment of the vessel.

A fourth aspect concerns a method of visually signalling the manoeuvrability of a vessel to a vessel operator, the method being performed by a manoeuvrability signalling arrangement and comprising the steps of:
- obtaining current speed data,
- obtaining current trim data,
- determining at least one current braking distance based on the current speed data of the vessel and the current trim data,
- receiving a user selection of an investigational speed,
- determining at least one predicted braking distance based on the investigational speed, and
- visually signalling manoeuvrability data to the vessel operator, said manoeuvrability data at least comprising the difference between the current braking distance and the predicted braking distance.

A fifth aspect concerns an arrangement for visually signalling the manoeuvrability of a vessel to a vessel operator, the arrangement comprising a visual signalling control unit configured to:
- obtain current speed data,
- obtain current trim data,
- determine at least one current braking distance based on the current speed data and the current trim data,
- receive a user input regarding vessel operations changes via an operator user interface comprising a user selection of an investigational speed,
- determine at least one predicted braking distance based on the investigational speed, and
- visually signal manoeuvrability data to the vessel operator via the operator user interface, said manoeuvrability data at least comprising the difference between the current braking distance and the predicted braking distance.

A sixth aspect concerns a computer program product for visually signalling the manoeuvrability of a vessel to a vessel operator, said computer program product being provided on a data carrier comprising computer program code configured to cause a manoeuvrability signalling arrangement to, when said computer program code is loaded into the manoeuvrability signalling arrangement
- obtain current speed data,
- obtain current trim data,
- determine an current turning radius of the vessel based on the current speed data and current trim data,
- receive user input regarding vessel operations changes from the vessel operator comprising a user selection of an investigational speed,
- determine at least one predicted braking distance based on the investigational speed, and
- visually signal manoeuvrability data to the vessel operator, said manoeuvrability data at least comprising the difference between the current braking distance and the predicted braking distance.

### BRIEF DESCRIPTION OF THE DRAWINGS

The present invention will in the following be described with reference being made to the accompanying drawings, where
Fig. 1 schematically shows a vessel in the form of a ship having a bridge,
Fig. 2 schematically shows the bridge comprising a number of windows and a computer functioning as a manoeuvrability signalling arrangement,
Fig. 3 schematically shows a computerized control system controlling various operations of the ship and including the manoeuvrability signalling arrangement,
Fig. 4 shows a first view of an operator user interface on which current and first predicted turning radii are shown together with a current braking distance,
Fig. 5 shows a second view of the operator user interface on which current turning radii and braking distance are shown together with second predicted turning radii,
Fig. 6 shows a third view of the operator user interface on which the current turning radii and braking distance are shown together with third predicted turning radii and a predicted braking distance,
Fig. 7 shows a flow chart of a number of method steps being performed in a method of visually signalling the manoeuvrability of the ship, and
Fig. 8 schematically shows a data carrier with computer program code, in the form of a CD-ROM disc, for performing the steps of the method.

### DETAILED DESCRIPTION OF THE INVENTION

In the following, a detailed description of preferred embodiments of a method, manoeuvrability signalling arrangement and computer program product for visually signalling the manoeuvrability of a vessel to a vessel operator will be given.

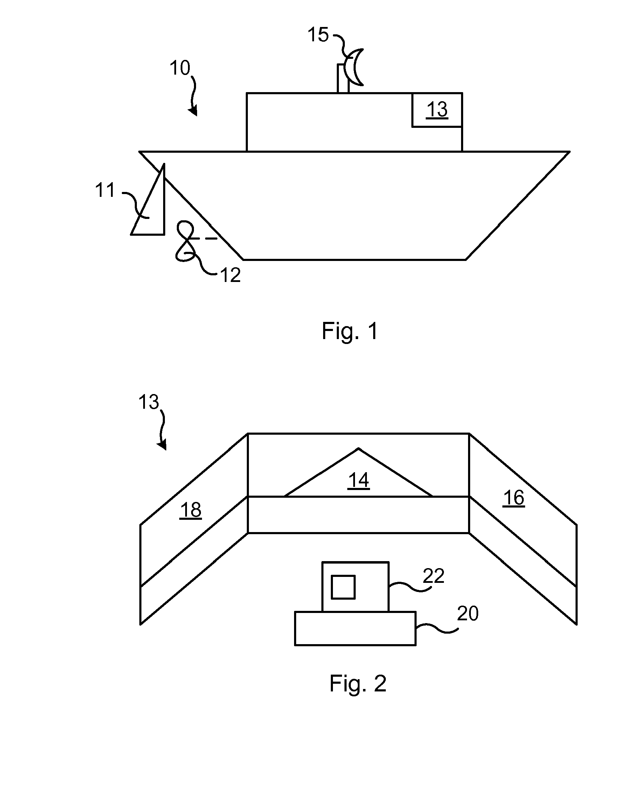

Fig. 1 schematically shows a vessel exemplified by a ship 10. The ship 10 shown in fig. 1 comprises a rudder 11, a propeller 12 as well as a radar 15. The propeller 12 is also connected to an engine (not shown) in order to propel the ship forward or backward. In order to control the propeller 12 and engine as well as the rudder 11, the ship 10 is also provided with a bridge 13, where various aspects of the ship 10 can be controlled. The rudder 11, propeller 12, engine and radar 15 are examples of entities used in relation to the steering of the ship 10. On the ship there are furthermore ballast tanks (not shown), which may be filled with liquid such as water in order to influence the steering of the vessel. In the figure only one propeller is shown. It should be realized that there may be more propellers, for instance in the bow. It may also be possible to move the ship sideways with certain type of motors.

Fig. 2 schematically shows the bridge 13. The bridge comprises three windows 14, 16 and 18, a first front window 14 facing the bow, a second starboard side window 16 and a third port side window 18. The windows are thus placed on the bridge 13. On the bridge there is also a bridge computer 20 with a display 22. The bridge computer 20 is according to some variations of the invention used for forming a manoeuvrability signalling arrangement and the display 22 is an operator user interface via which a ship operator can make various selections with regard ship operations and see various ship operations data, which ship operations data comprises manoeuvrability data.

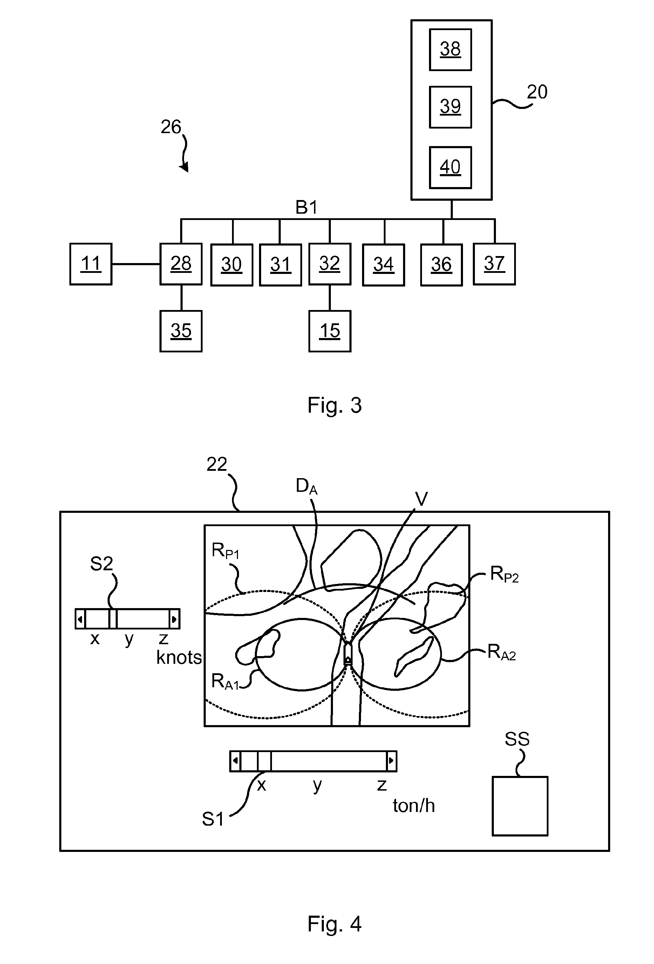

Fig. 3 shows a block schematic of a simplified control system 26 that may be used for controlling the ship. The control system 26 is a computerized control system.

In fig. 3 the control system includes a number of work stations. In this example only one is shown, which is the above-mentioned bridge computer 20. It should however be realized that there may be several work stations for instance in other areas of the ship. As the bridge computer is used for forming a manoeuvrability signalling arrangement it comprises a vessel position presenting unit 38, a visual signalling control unit 39 and a control handling unit 40.

The bridge computer 20 is connected to a data bus B1.

There are furthermore a group of vessel handling computers connected to the bus 10, which computers are provided for handling various aspects of the vessel, such as navigation and security aspects. These computers more particularly provide data of different types employed in the navigation and steering of the vessel.

There is here a manoeuvring control computer 28, a forecasting computer 30, a load computer 31, a tracking computer 32, a chart computer 34, a sensor handling computer 36 and an external indications computer 37. These computers are involved in handling various aspects of the ship. The manoeuvring control computer 28 may be involved with controlling manoeuvring such as steering using the rudder and controlling direction and speed through controlling the propeller. For this reason it is connected to the engine 35 and to the rudder 11. It may also control the ballast tanks in order to further influence the manoeuvrability. It may for this reason be connected to valves of the tanks in order to control filling and emptying of such tanks (not shown). The forecasting computer 30 is a computer used for keeping track of the weather and receives weather forecast data from weather forecast services. The data may comprise weather forecasts such as forecasts of low pressure areas, their movements and their wind speeds. This computer 30 is therefore used for keeping track of weather changes and the movement of weather systems such as the movement of storms. The load computer 51 keeps track of the distribution and weight of the load or cargo on vessel. The tracking computer 32 is used for tracking other vessels and is therefore connected to the radar 15. This computer 32, which may be part of an Automatic Identification (AIS) system, is thus used for keeping track of mobile objects in the environment. The chart computer 34 comprises navigation charts of the waters through which the ship is to move. The chart computer 34 therefore keeps track of stationary objects or obstacles in the environment. The chart computer 34 may also comprise route data, i.e. data defining a route that the ship is to take.

The sensor handling computer 36 is provided for receiving sensor data such as position data, speed data, draught data of the vessel, i.e. how deep into the water the vessel sails, the trim and the list, where the trim is a measure of the ballast distribution of the ship. The trim may be represented by one or more angles between the keel and the water. If the vessel is a stiff body then the trim may be represented by the horizontal angle of the vessel in the sea in the longitudinal direction of the vessel. List may on the other hand be a horizontal angle of the vessel in the sea at right angles to the above mentioned trim angle. Various sensors may for this reason be placed at different locations of the ship. A position sensor may be a Global Positioning Sensor.

Finally the external indications computer 37 is provided for receiving external indications such as piracy indications and/or International Ship and Port Facility Security (ISPS) security indications.

There may also be a control computer involved in ship management, such as controlling ventilation and lights. The bridge 13 of the ship is surrounded by the windows 14, 16 and 18 for the crew of the ship to be able to visually observe the environment of the ship. The bridge may comprise a main bridge and possibly two wing bridges on the port and starboard sides in order to enable support to be given to the captain or navigator as he or she manoeuvres the ship in a harbour.

User interface screens for visualizing information related to navigation, voyage and ship management systems may be located around the bridge so that they are visible when a crew member is seated or standing next to a pilot chair/station. In this setting there may furthermore be meters above the windows. A crew member standing at the main bridge, can then also look at the meters to see different values related to velocity, pitch, etc.

Ship operations on bridges today require more attention from the personnel when entering or leaving the harbour compared to when out on the sea. In most cases, normal operations during the voyages means that the personnel at ship, i.e. ship operators, keep watch and steer the ship away from obstacles such as islands and reefs.

On ships such as cargo ships fuel consumption may be an issue. One way of influencing the fuel consumption is through influencing ship operations data in the form of the trim of the ship, where the trim may be represented by the horizontal angle of a rigid vessel in the sea.

However, a change in trim will influence the manoeuvrability of the ship and this may in some situations be necessary to monitor closely. It may also be of interest for a ship operator to be able to see in advance the calculated or predicted consequences of changes in the trim, possibly together with changes in relation to other ship operations data such as vessel speed. Finally it may be of interest for the ship operator to easily select ship operations data settings once the consequences have been observed.

Aspects of the invention are directed towards solving some or all of the above problems.

In order to more easily select and better present the consequences of various changes in the ship operations data, a view such as the view in fig. 4 may be used for the display of ship operations data via the operator user interface 22.

The vessel position presenting unit 38 of the manoeuvrability signalling arrangement 20 may display the position of the ship in a physical environment on the display 22. The position of the ship may be obtained from the sensor handling computer 36 and data about the physical environment may be obtained through obtaining a chart of an area covering the positions for the chart computer 34. The vessel position presenting unit 38 may then place a graphical representation V of the ship on the chart in a position on the chart corresponding to the sensed ship position. The vessel position presenting unit 38 may also obtain route data concerning the route of the ship from the chart computer and plot this in the chart. In fig. 4 there is one such representation of a ship or vessel V in a chart, which chart shows three islands and a fairway or shipping lane via which the route of the ship may pass.

In fig. 4 there is also shown visual representations of manoeuvrability data being provided by the visual signalling control unit 39. The manoeuvrability data here comprises an actual or current turning radius R_{A1} and R_{A2} on the port and starboard sides of the ship V, an actual or current braking distance D_{A} and predicted turning radii R_{P1} and R_{P2} on the port and starboard sides of the ship V. In order to receive user inputs, there are also shown two sliders, a first slider S1 via which fuel consumption/trim may be input, a second slider S2 via which ship speed may be input as well as a setting selection button SS via which manoeuvrability data may be selected. In fig. 4 the first slider has a first fuel consumption setting and the second slider S2 has a first speed setting. It should here be realized that the first slider S1 may instead only show trim or only fuel consumption. It should also be realised that sliders are just one way of realizing user inputs. It is also possible with for instance knobs or levers. Also the setting selection button may be realized differently.

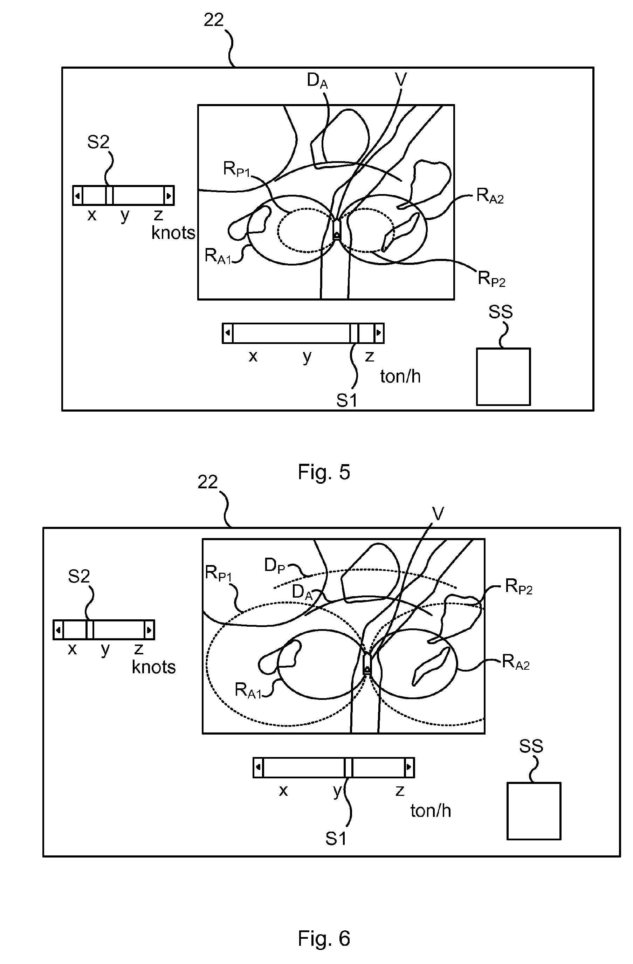

Fig. 5 shows a second view of the display depicting the same current turning radii R_{A1} and R_{A2}, current braking distance D_{A} and first ship speed setting. However, in this figure there is a different fuel consumption setting and also different predicted turning radii R_{P1} and R_{P2}.

Fig. 6 shows yet another view where the current turning radii R_{A1} and R_{A2} and current braking distance D_{A} are retained. However, here the predicted turning radii R_{P1} and R_{P2} and fuel consumption settings differ from both fig. 4 and 5. There is also a different ship speed setting. In the view there is furthermore shown a predicted braking distance D_{P}.

As shown in figs 4-6, any of an actual or current turning radius or braking distance may be shown on an operator user interface or screen display together with any of a predicted turning radius or braking distance. In other words, both current manoeuvrability data and predicted manoeuvrability data are displayed in plain sight of an operator so that the operator may see and visually compare information about the present position and the predicted position of the vessel.

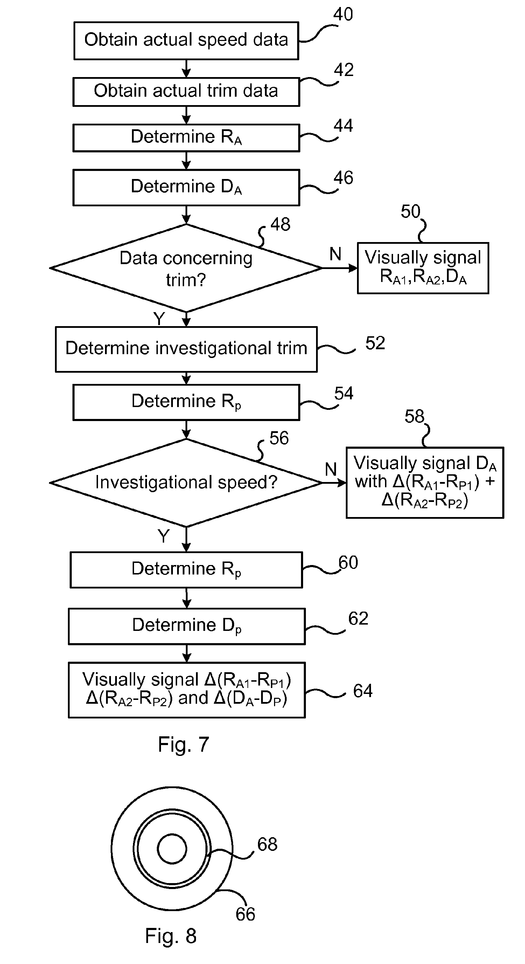

Now the first embodiment will be described in more detail with reference also being made to fig. 7, which shows a number of method steps in a method of calculating or predicting manoeuvrability data such as trim, turning radii or braking distances and visually signalling the predicted manoeuvrability of the ship.

The visual signalling control unit 39 provides a manoeuvrability simulation mode, in which the consequences of ship operations data changes on the manoeuvrability are visualized in relation to prevailing operational settings.

In this mode the display 22 thereby provides a manoeuvrability view where a ship operator on the bridge can view the current manoeuvrability in terms of turning radii and braking distance of the vessel. The ship operator is also able to see how the manoeuvrability can be changed by changing either the trim/fuel consumption or the speed of the vessel.

For this reason the visual signalling control unit 39 connects to the sensor handling computer 36 and receives data about the current speed, step 40. It also obtains or receives current trim data from the same sensor handling computer 36, step 42. The sensor handling computer 36 may in turn have gathered this data from various sensors on the ship. It should here be realized that as an alternative it is possible that the visual signalling control unit 39 may obtain the same data from the manoeuvring control computer 28. The manoeuvring control computer 28 may for instance be able to provide speed data based on the operation of the engine 35. It is also possible for the visual signalling control unit 39 to directly receive that data from suitable sensors.

After having obtained the above-mentioned data, the visual signalling control unit 39 determines the current turning radius R_{A} of the ship, step 44. It more particularly determines the turning radius of the ship based on the current trim, current speed and on general ship manoeuvrability data. General ship manoeuvrability data may comprise available rudder angles, list, drought obtained from the manoeuvring control computer 28 and/or sensor handling computer 32. General ship manoeuvrability data may also comprise vessel dimensions and vessel mass, which may be known in advance, as well as load distribution and cargo mass obtained from the load computer 31. It is possible that a separate port side turning radius R_{A1} and starboard side turning radius R_{A2} are determined, in which case it is possible to also consider other factors such as wind, current and waves, which may be obtained from the forecasting computer 30 and/or chart computer 34.

A turning radius may be based on the steady turning diameter according to equation A4.1 of "Guide for Vessel Maneuverability", American Bureau of Shipping, 2006, page 88, where rudder angle, trim and vessel dimensions are considered.

A turning radius may additionally be determined based on the tactical diameter according to equation A4.2 of the "Guide for Vessel Maneuverability", American Bureau of Shipping, 2006, page 88, in which case also the vessel speed is considered.

It is also possible to determine advance according to equation A4.3 as well as transfer according to equation A4.4 of "Guide for Vessel Maneuverability", American Bureau of Shipping, 2006, page 88 and use these for a turning radius.

The visual signalling control unit 39 also determines the current braking distance D_{A}, step 46, which may be determined based on ship speed and weight. Also in this case it is possible to consider the other general manoeuvrability data, such as wind, current and waves. In the first embodiment, the trim is considered to be too insignificant to influence the braking distance. It is thus not used. It should however be realized that it is also possible to consider the trim in determining of the braking distance.

One way in which the braking distance may be determined is shown in equations A4.6 and A4.7 of "Guide for Vessel Maneuverability", American Bureau of Shipping, 2006, page 89.

The visual signalling control unit 39 then monitors the user interface 22 in order to detect if the ship operator has input any data regarding ship operations changes that can be used for investigational trim. In this first embodiment this is done through investigating if the user has manipulated the first slider S1 in order to provide a different fuel consumption/trim. A sliding of the first slider S1 to the right will increase the fuel consumption and a sliding of the slider S1 to the left will decrease the fuel consumption.

If the user has not, step 48, then manoeuvrability data in the form of the current turning radii R_{A1} and R_{A2} for both starboard and port and the actual or currently predicted braking distance D_{A} are visually signalled to the user via the display 22, step 50.

However, in case the user has manipulated the first slider, step 48, then an investigational trim is obtained based on the received user input, step 52.

The investigational trim may be determined based on the new fuel consumption, the current speed, engine operations data and possibly also the mass of the ship and mass and distribution of the cargo.

Based on this investigational trim, the visual signalling control unit 39 then determines at least one predicted turning radius R_{P1} step 54. In this embodiment it determines two, one for the starboard and one for the port side R_{P1} and R_{P2}.

Then the visual signalling control unit 39 monitors the user interface 22 in order to detect if the ship operator has input any data regarding ship operations changes in the form of an investigational speed.

In this first embodiment this is done through investigating if the user has manipulated the second slider S2 in order to provide a different ship speed that is to be investigated. A sliding of the second slider S2 to the right will increase the speed and a sliding of the slider S2 to the left will decrease the speed.

If the user has not, step 56, then manoeuvrability data in the form of the current braking distance D_{A} is visually signalled together with at least the difference between the current and predicted turning radius, step 58. If there are turning radii for both starboard and port the difference Δ(R_{A1}-R_{P1}) and Δ(R_{A2}-Rp₂) between the current and predicted turning radius is visually signalled to the user for both. The difference may be signalled through displaying both the current and predicted turning radii. The current turning radius may therefore be visually signalled together with the predicted turning radius. In this way the difference is obtained through the display of current and predicted turning radii.

However, in case the user has manipulated the second slider S2, step 56, a number of activities are performed.

First new predicted turning radii R_{P} are determined, step 60. As a turning radius has a dependence on the speed, new radii corresponding to the new speed are determined. Also a predicted braking distance D_{P} is determined, step 62. The predicted braking distance may be determined using the same principles used for obtaining the current braking distance D_{A}. It is here possible to use or omit the investigational trim in the determination of braking distance.

Thereafter manoeuvrability data in the form of at least the difference between the current and predicted turning radii for both port Δ(R_{A1}-R_{P1}) and starboard Δ(R_{A2}-R_{P2}) and at least the difference between the current and predicted braking distance Δ(D_{A}-D_{P}) are visually signalled to the user via the display 22, step 64. The difference may also here be signalled though displaying both the current and predicted values.

One way in which the visual signalling of a turning radius can be made is evident from fig. 4 - 6. A port side turning radius may be signalled through a first trajectory tangential to the port of the visual representation V of the ship, i.e. as a trajectory started at and moving away from the port of the representation. In the example in fig. 4 - 6 the port side turning radius is implemented as a first ellipse tangential to the port of the visual representation V of the ship. The starboard side turning radius may in turn be visually signalled as second trajectory tangential to the starboard side of the visual representation V of the ship, i.e. as a trajectory started at and moving away from the starboard of the representation. In the example in fig. 4 - 6 the starboard side turning radius is implemented as a second ellipse tangential to the starboard of the visual representation V of the ship. A circle is as is well known one type of ellipse and may thus also be used.

A braking distance may in turn be visually signalled as a curve section on a distance from the visual representation (V) of the vessel corresponding to the current braking distance. As a number of influences can be used to determine the braking distance, it may differ depending on the direction of the ship. The curve may thereby vary in order to reflect the differing direction dependent braking distances. In the example in fig. 4, there is only one value determined which is the value in which the bow is pointing. This value is in this specific example provided for the whole curve section. In this example the curve section thus has a radius corresponding to the current braking distance in the direction in which the bow is pointing. The centre of the radius may here be placed on the representation of the ship. A curve section may furthermore be placed in front of a bow of the visual representation of the ship. The curve section may, for all the possible variations, have a start angle between 0 and 90 degrees to an axis stretching longitudinally through the representation of the ship and an end angle between 0 and -90 degrees to the same axis.

This type of signalling gives the ship operator a good indication of the manoeuvrability in a quick and directly understandable way. He or she may therefore easily select a fuel consumption (or trim) and possibly also speed that best matches the situation while giving acceptable manoeuvrability in the environment of the ship.

An example when the trim is decreased, that is the ship is trimmed more to the bow, is shown in fig. 4. Normally this is a more efficient trim and the fuel consumption will therefore go down. On the other hand, more trim to the bow normally yields a worse manoeuvrability and therefore the predictions of the turning radii R_{P1} and R_{P2} have increased in both directions.

The opposite scenario with regard to trim is depicted in Figure 5. Here, a larger trim is evaluated which means that the ship is trimmed more to the aft. This case often yields a better manoeuvrability, however at the cost of a higher fuel consumption and a higher environmental impact. The improved manoeuvrability can be seen in the smaller radii R_{P1} and R_{P2} obtained from the predictions.

In the third scenario in Figure 6, also a speed change (increase) is evaluated. The results are larger turning radii R_{P1} and R_{P2} and a longer braking distance D_{P}.

In order to enable for the ship operator to select manoeuvrability settings the control handling unit 40 provides a manoeuvrability setting implementation mode, in which the ship operator may put the manoeuvrability settings tested in the manoeuvrability simulation mode into operation. For this reason the control handling unit 40 may provide the setting selector SS, which is selectable by the ship operator.

If the user presses this button SS then the control handling unit 40 will receive a user selection of ship operations data corresponding to the visually signalled manoeuvrability data, and then provides the selected ship operations data to the manoeuvring control computer 28 for being used in the control of the ship. It thus sends the speed and trim data to the ship manoeuvring control computer, which applies these through for instance changing the engine speed and changing the load in the ballast tanks.

When doing this the control handling unit 40 may further investigate the route of the ship and navigational hazard data for instance via the chart computer, such as if there are natural objects, like islands and reefs, that could be hit if the ship is turned or that the ship cannot avoid hitting at maximum braking. The control handling unit may then compare the user selected ship operations data with the route data and navigational hazard data. It may then warn the operator of the use of the user selected ship operations data if the comparison indicates that a navigational hazard may occur. The warning may be implemented through a visual indicator on or in the vicinity of a navigational obstacle causing the navigational hazard. The visual indication may for instance be provided through highlighting or blinking the navigational obstacle that may be another vessel or an island. It may also be accompanied by an audible warning. The navigational obstacle being visually indicated in this way may be an obstacle calculated to be within a distance of the vessel defined by the manoeuvrability data corresponding to the user selected ship operations data. It may thus be an obstacle that is found to be within a turning radius corresponding to the user selected ship operations data and/or within a braking distance corresponding to the user selected ship operations data. The visual indicator may be provided in relation to both current and predicted turning radii and braking distances. It is thus not limited to being provided in relation to user selected ship operations data.

The control handling unit 40 may instead or additionally deny the use of user selected vessel operations data if the comparison indicates that a navigational hazard may occur. The control handling unit 40 may thus warn about the consequences of the selection and/or abort the selection if it turns out that the likelihood of hitting an obstacle is high with the new settings.

This thus combines a simpler operations data setting with a safety measure. It should here be realized that the just described safety measure may be enhanced through also considering moving obstacles such as other ships.

There are a number of different variations that can be made of the present invention.

It is possible that one or more turning radii is estimated and visually signalled in relation to corresponding current turning radii without estimating and visually signalling a braking distance. It is also possible that a braking distance is estimated and visually signalled in relation to a corresponding current braking distance without estimated turning radii.

According to some aspects there may therefore also be provided the further aspects
a. A method of visually signalling the manoeuvrability of a vessel (10) to a vessel operator, the method being performed by a manoeuvrability signalling arrangement (20) and comprising the steps of::
   - obtaining (40) current speed data,
   - obtaining (42) current trim data,
   - determining (46) at least one current braking distance (DA) based on the current speed data of the vessel and the current trim data,
   - receiving a user selection of an investigational speed,
   - determining (62) at least one predicted braking distance (DP) based on the investigational speed, and
   - visually signalling manoeuvrability data to the vessel operator, said manoeuvrability data at least comprising the difference between the current braking distance and the predicted braking distance.
b. The method according to aspect a, wherein the visually signalling of the difference comprises visually signalling the current braking distance together with the predicted braking distance.
c. The method according to aspect b, wherein a braking distance is visually signalled as a curve section on a distance from the visual representation (V) of the vessel corresponding to the current braking distance.
d. The method according to aspect c, wherein the centre of the radius is placed on the representation of the vessel.
f. An arrangement (20) for visually signalling the manoeuvrability of a vessel to a vessel operator, the arrangement comprising a visual signalling control unit (39) configured to:
   - obtain current speed data,
   - obtain current trim data,
   - determine at least one current braking distance (DA) based on the current speed data and the current trim data,
   - receive a user input regarding vessel operations changes via an operator user interface (22) comprising a user selection of an investigational speed,
   - determine at least one predicted braking distance (DB) based on the investigational speed, and
   - visually signal (56) manoeuvrability data to the vessel operator via the operator user interface (20), said manoeuvrability data at least comprising the difference between the current braking distance and the predicted braking distance.
g. The arrangement (20) according to aspect f, wherein the visual signalling control unit (39) when performing visual signalling is configured to visually signal the current braking distance (DA) together with the predicted braking distance.
h. The arrangement (20) according to aspect g, wherein the visual signalling control unit when performing visual signalling of braking distance is further configured to visually signal a braking distance as a curve section on a distance from the visual representation (V) of the vessel corresponding to the current braking distance.
i. A computer program product for visually signalling the manoeuvrability of a vessel (10) to a vessel operator, said computer program product being provided on a data carrier (66) comprising computer program code (68) configured to cause a manoeuvrability signalling arrangement to, when said computer program code is loaded into the manoeuvrability signalling arrangement
   - obtain current speed data,
   - obtain current trim data,
   - determine an current turning radius (RA) of the vessel based on the current speed data and current trim data,
   - receive user input regarding vessel operations changes from the vessel operator comprising a user selection of an investigational speed,
   - determine at least one predicted braking distance (DB) based on the investigational speed, and
   - visually signal manoeuvrability data to the vessel operator, said manoeuvrability data at least comprising the difference between the current braking distance and the predicted braking distance.

There also exist further possible variations.

In the case where a ship is operated so as to travel a distance in a reverse direction, the information and visualisation of manoeuvrability data such as turning radii, braking distances, trim etc. may be placed in front of the stern, i.e. in the direction of travel, of a visual representation (V) of the vessel.

The manoeuvrability signalling arrangement may be implemented using software. It may thus be implemented using computer program code, which may be provided on one or more data carriers which performs the functionality of the manoeuvrability signalling arrangement when the program code thereon is being loaded into the bridge computer. One such data carrier 66 with computer program code 68, in the form of a CD ROM disc, is schematically shown in fig. 8. Such computer program may as an alternative be provided on another server and downloaded therefrom into the bridge computer.

The invention is not limited to ships, but may be used with other vessels, such as aeroplanes.

The manoeuvrability signalling arrangement is not limited to the bridge computer. It may for instance also comprise the user interface 22. It may furthermore comprise the manoeuvring control computer. It is also possible that it comprises the sensor handling computer perhaps together with or replaced by sensors and/or the load computer. The manoeuvrability signalling arrangement may furthermore comprise also the chart computer and possibly also the forecasting computer.

Furthermore, the invention is not limited to being performed on a vessel. Parts of the functionality may be provided on a computer with which the ship system communicates, for instance a computer on land. The visual signalling control unit may for instance be provided on a computer on land that receives data and user inputs from a ship and determines turning radii and/or braking distances based on this data and input and then returns manoeuvrability data for being displayed on the ship. In this case it is also possible that some of the data on which turning radii and/or braking distances are based is provided by a computer on land.

## Claims

1. A method of visually signalling the manoeuvrability of a vessel (10) to a vessel operator, the method being performed by a manoeuvrability signalling arrangement (20) and comprising the steps of : .
- obtaining (40) current speed data,
- obtaining (42) current trim data,
- determining (44) a current turning radius (R_{A}) of the vessel based on the current speed data and current trim data,
- receiving user input regarding vessel operations changes from the vessel operator,
- obtaining (52) an investigational trim based on the received user input,
- determining (54) a predicted turning radius (R_{P}) of the vessel based on the investigational trim, and
- visually signalling (58; 64) manoeuvrability data to the vessel operator, said manoeuvrability data at least comprising the difference between the current turning radius and the predicted turning radius.

2. The method according to claim 1, wherein the visually signalling of the difference comprises visually signalling the current turning radius together with the predicted turning radius.

3. The method according to claim 2, wherein the visual signalling of a turning radius comprises visually signalling a first trajectory tangential to the port of a visual representation of the vessel and as a second trajectory tangential to the starboard of the visual representation of the vessel.

4. The method according to any previous claim, further comprising determining (46) at least one current braking distance (D_{A}) based on the current speed data of the vessel and the current trim data.

5. The method according to claim 4, wherein the visual signalling of manoeuvrability data comprises visually signalling the current braking distance to the vessel operator.

6. The method according to claim 4 or 5, wherein the user input of vessel operations change comprises a user selection of an investigational speed and the method further comprises determining (62) at least one predicted braking distance (D_{P}) based on the investigational speed and the visual signalling of manoeuvrability data comprises visually signalling (64) at least the difference between the current braking distance and the predicted braking distance to the vessel operator.

7. The method according to claim 6 when depending on claim 5, wherein the visual signalling comprises also visually signalling the predicted braking distance.

8. The method according to claim 7, wherein a braking distance is visually signalled as a curve section on a distance from the visual representation (V) of the vessel corresponding to the current braking distance.

9. The method according to claim 8, wherein the centre of the radius is placed on the representation of the vessel.

10. The method according to any previous claim, further comprising receiving a user selection of vessel operations data corresponding to the visually signalled manoeuvrability data and providing the selected vessel operations data to a manoeuvring control computer (28) for being used in the control of the vessel.

11. The method according to claim 10, further comprising obtaining route data of the vessel and navigational hazard data, comparing the manoeuvrability data corresponding to the user selected vessel operations data with the route and navigational hazard data and warning from implementing and/or stopping use of the user selected vessel operations data if the comparison indicates that a navigational hazard will occur using the user selected vessel operations data.

12. The method according to claim 11, further comprising visualizing the warning by means of a visual indicator on or in the vicinity of a navigational obstacle causing the navigational hazard, which navigational obstacle is calculated to be within a distance of the vessel defined by the manoeuvrability data corresponding to the user selected vessel operations data.

13. An arrangement (20) for visually signalling the manoeuvrability of a vessel to a vessel operator, the arrangement comprising a visual signalling control unit (39) configured to:
- obtain current speed data,
- obtain current trim data,
- determine an current turning radius (R_{A}) of the vessel based on the current speed data and current trim data,
- receive a user input regarding vessel operations changes via an operator user interface (22),
- obtain an investigational trim based on the received user input,
- determine a predicted turning radius (R_{P}) of the vessel based on the investigational trim, and
- visually signal (56) manoeuvrability data to the vessel operator via the operator user interface (20), said manoeuvrability data at least comprising the difference between the current turning radius and the predicted turning radius.

14. The arrangement (20) according to claim 13, wherein the visual signalling control unit (39) when performing visual signalling is configured to visually signal the current turning radius together with the predicted turning radius.

15. The arrangement (20) according to claim 14, wherein the visual signalling control unit (39) when visually signalling a turning radius is configured to visually signal a first trajectory tangential to the port of a visual representation V of the vessel and a second trajectory stretching out from the starboard of the visual representation of the vessel.

16. The arrangement (20) according to any of claims 13 - 15, wherein the visual signalling control unit (39) is further configured to determine at least one current braking distance (D_{A}) based on the current speed data and the current trim data.

17. The arrangement (20) according to claim 16, wherein the visual signalling control unit when visually signalling manoeuvrability data is further configured to visually signal the current braking distance (D_{A}) to the operator via the operator user interface.

18. The arrangement (20) according to claim 16 or 17, wherein the user input of vessel operations change comprises a user selection of an investigational speed and the visual signalling control unit is further configured to determine at least one predicted braking distance (D_{B}) based on the investigational speed and when performing visual signalling of braking distance is further configured to visually signal at least the difference between the current braking distance and the predicted braking distance to the vessel operator via the operator user interface.

19. The arrangement (20) according to claim 18 when depending on claim 17, wherein the visual signalling control unit when performing visual signalling of braking distance is further configured to visually signal also the predicted braking distance.

20. The arrangement (20) according to any of claims 17 - 19, wherein the visual signalling control unit when performing visual signalling of braking distance is further configured to visually signal a braking distance as a curve section on a distance from the visual representation (V) of the vessel corresponding to the current braking distance.

21. The arrangement (20) according to any of claims 13 - 20, further comprising a control handling unit (40) configured to receive a user selection of vessel operations data corresponding to visually signalled manoeuvrability data via the operator user interface and provide the selected vessel operations data to a manoeuvring control computer (28) for being used in the control of the vessel.

22. The arrangement according to claim 21, the control handling unit (40) being further configured to obtain route data of the vessel and navigational hazard data, compare the manoeuvrability data corresponding to the user selected vessel operations data with the route data and navigational hazard data and warn from implementing and/or deny the use of the user selected vessel operations data if the comparison indicates that a navigational hazard may occur with the user selected vessel operations data.

23. The arrangement according to claim 22, the control handling unit (40) being further configured to visualize the warning on the operator interface by means of a visual indicator on or in the vicinity of a navigational obstacle causing the navigational hazard, which navigational obstacle is calculated to be within a distance of the vessel defined by the manoeuvrability data corresponding to the user selected vessel operations data.

24. The arrangement (20) according to any of claims 13 - 23, further comprising the operator user interface (22).

25. The arrangement (20) according to any of claims 13 - 24, further comprising the manoeuvring control computer (28).

26. A computer program product for visually signalling the manoeuvrability of a vessel (10) to a vessel operator, said computer program product being provided on a data carrier (66) comprising computer program code (68) configured to cause a manoeuvrability signalling arrangement to, when said computer program code is loaded into the manoeuvrability signalling arrangement
- obtain current speed data,
- obtain current trim data,
- determine an current turning radius (R_{A}) of the vessel based on the current speed data and current trim data,
- receive user input regarding vessel operations changes from the vessel operator,
- obtain an investigational trim based on the received user input,
- determine a predicted turning radius (R_{P}) of the vessel based on the investigational trim, and
- visually signal manoeuvrability data to the vessel operator, said manoeuvrability data at least comprising the difference between the current turning radius and the predicted turning radius.
